# EUROPÄISCHE PATENTSCHRIFT

(11) **EP 1 881 286 B1**
(45) Veröffentlichungstag und Bekanntmachung des Hinweises auf die Patenterteilung: **24.06.2015**
(21) Anmeldenummer: 07112262.6
(22) Anmeldetag: 11.07.2007
(51) Int. Cl.: F27D 3/16, C21C 5/46, C21C 5/52, C21B 9/14

(54) **Verfahren und Vorrichtung zum Eintragen eines Mediums in einen thermischen Behandlungsraum**
Method and device for feeding a medium into a thermal treatment chamber
Procédé et dispositif destinés à l'introduction d'un milieu dans un espace de traitement thermique

(30) Priorität: 22.07.2006 DE 102006034007
(43) Veröffentlichungstag der Anmeldung: 23.01.2008
(73) Patentinhaber: Messer Group GmbH, 65812 Bad Soden (DE)
(72) Erfinder: Addendorf, Martin William, 47798 Krefeld (DE); Grohmann, Paul, 2372 Gießhübl (AT)
(74) Vertreter: Münzel, Joachim R.

(56) Entgegenhaltungen:
- WO-A-99/22032
- DE-A1- 10 253 463
- FR-A- 2 797 738
- US-A- 6 038 245

## Beschreibung

Die Erfindung bezieht sich auf ein Verfahren zum Eintragen eines Behandlungsmediums in einen thermischen Behandlungsraum mittels einer Eintragseinrichtung, insbesondere eines Brenners oder einer Lanze, welche Eintragseinrichtung mittels eines durch ein zum Behandlungsraum hin geschlossenes Kühlsystem geführten Kühlmediums gekühlt wird. Die Erfindung bezieht sich zudem auf sowie auf eine Eintragseinrichtung hierfür.

Einrichtungen zum Eintragen eines Mediums oder mehrerer Medien in den Innenbereich von thermischen Behandlungsräumen, wie beispielsweise Brennkammern, Wärmebehandlungsöfen, Verbrennungsöfen, Müllverbrennungsanlagen etc. sind bekannt. Es handelt sich dabei beispielsweise um Brenner zum Zuführen von Brennstoff und Oxidationsmittel oder um Lanzen zum Einblasen von Luft oder Sauerstoff zum Sauerstofffrischen einer Eisenschmelze oder zum Einblasen von Medien bei der Stahlbehandlung oder um Lanzen, die als Träger von Instrumenten zum Messen von Eigenschaften der Schmelze oder von Abgasen genutzt werden. Der dem Innenbereich zugewandte Abschnitt einer solchen Einrichtung unterliegt einer hohen thermischen Beanspruchung. Aus diesem Grunde werden derartige Eintragseinrichtungen häufig mit Kühlkreisläufen ausgerüstet. In diesen Kühlkreisläufen wird ein Kühlmittel, häufig Wasser, bis zum schmelzenseitigen Ende des Brenners oder der Lanze geführt, durch den thermischen Kontakt mit dem heißen Ende des Brenners oder der Lanze erhitzt und anschließend abgeführt. Der Betrieb wassergekühlter Systeme ist jedoch nicht ungefährlich, da es im Falle eines Lecks im Kühlkreislauf zu einer explosionsartigen Verdampfung des Wassers oder gar zu einer Zersetzung des Wassers mit anschließender Knallgasreaktion kommen kann.

In der DE 102 53 463 A1 wird eine Vorrichtung zur Kühlung von Blaslanzen beschrieben, bei der als Kühlmedium ein Gas, insbesondere überhitzter Wasserdampf, zum Einsatz kommt, das mit hohem Druck durch konzentrisch zum zentralen Eintragsrohr für das Blasmedium angeordnete Kühlkanäle geführt wird.

Durch den Einsatz von Gas anstelle von Wasser soll insbesondere die mit dem Eindringen von Wasser durch eine Leckage der Blaslanze in den thermischen Behandlungsraum verbundene Explosionsgefahr beseitigt werden.

Aus der DE 100 35 008 C2 ist eine Lanze zum Einbringen von Sauerstoff in Metallschmelzen bekannt, die mittels einer Mischung aus Wasserdampf und Erdgas gekühlt wird. Die Kühlung wird dabei dadurch erreicht, dass der Wasserdampf in einer endothermen Reaktion mit dem Erdgas zu Kohlenmonoxid und Wasserstoff umgewandelt wird und dadurch die Lanze kühlt. Die entstehenden Reaktionsgase werden anschließend in den Behandlungsraum des Schmelzofens eingeleitet. Dieser Gegenstand weist also im Unterschied zu den zuvor genannten Einrichtungen keine zum Behandlungsraum hin geschlossene Kühlmediumsführung auf. Nachteilig ist, dass die in den Behandlungsraum eingeleiteten Reaktionsgase die Atmosphäre im Behandlungsraum beeinflussen, was bei vielen Anwendungen unerwünscht ist.

In der EP 1 062 370 B1 wird vorgeschlagen, im Kühlkreislauf einer Blaslanze ein Gas-Flüssigkeitsgemisch zu führen, das unter Druck bis in den Bereich des schmelzseitigen Endes des Lanzenrohres geführt und dort entspannt wird. Beim Entspannungsvorgang wird das Wasser in sehr feine Tröpfchen zerrissen. Die dadurch vergrößerte Oberfläche des Wassers sorgt für eine schnelle Wärmeaufnahme und damit eine hohe Kühlleistung. Das entspannte Gemisch wird anschließend wieder zurückgeführt; das Kühlmedium beeinflusst somit nicht die Atmosphäre im Behandlungsraum. Dieser Gegenstand hat sich in der Praxis vielfach bewährt. Nachteilig ist jedoch, dass bei der Kühlung des Lanzenrohres zugleich auch das durch das Lanzenrohr geführte Medium wesentlich abgekühlt wird. Dadurch kommt es zu einer ungünstigen Energiebilanz beim Einsatz der Lanze.

In der FR 2 797 738 A1 wird vor erwärmter Sauerstaff über eine gekühlte Lanze in einen elektrischen Lichtbogenofen eingebracht.

Aufgabe der vorliegenden Erfindung ist es, eine Möglichkeit zum Eintragen eines Mediums in einen thermischen Behandlungsraum zu schaffen, bei der die Energiebilanz gegenüber entsprechenden Einrichtungen nach dem Stande der Technik verbessert ist.

Gelöst ist diese Aufgabe bei einem Verfahren der eingangs genannten Art dadurch, dass das Behandlungsmedium vor seiner Zuführung zur Eintragseinrichtung vorgewärmt wird.

Durch das erfindungsgemäße Verfahren wird die Energiebilanz des Prozesses, bei dem es sich beispielsweise um eine Wärmebehandlung oder eine Verbrennung handelt, deutlich verbessert. Als "Behandlungsmedium" wird hier insbesondere Brennstoff oder Oxidationsmittel verstanden. Als Brennstoff können alle herkömmlichen gasförmigen, flüssigen oder festen Brennstoffe, besonders vorteilhaft Erdgas oder Öl, eingesetzt werden. Als Oxidationsmittel kommt reiner Sauerstoff, Luft oder ein anderes sauerstoffhaltiges Gas in Betracht. Als Kühlmedium kann ein gasförmiges oder flüssiges Medium zum Einsatz kommen. Beispielsweise wird beim Einsatz des erfindungsgemäßen Verfahrens zur Vorwärmung von einzublasendem Sauerstoff eine intensivere Kohlenstoff-Reaktion bei der durch das Sauerstoffaufblasen vorzunehmenden Entkohlungen, eine intensivere Aluminium-Reaktion beim chemischen Heizen sowie ein verbesserter Sauerstoff-Wirkungsgrad und damit verbunden ein geringerer Sauerstoffbedarf erzielt. Das erfindungsgemäße Verfahren ist in allen Arten mediumsgekühlter Brenner einsetzbar, so in Luft-Brennstoff Brennern, Sauerstoff-Brennstoff-Brennern oder in Blaslanzen zum Einblasen von Luft und/oder Sauerstoff in eine Wärmebehandlungskammer oder eine Verbrennungskammer.

Das Kühlmedium wird vor seiner Zuführung an die Kühlflächen der Eintragseinrichtung auf eine Temperatur aufgewärmt, bei der gewährleistet ist, dass einerseits eine hinreichende Kühlung des Materials der Eintragseinrichtung erfolgt, andererseits die Wärmeübertragung von dem zur Eintragung bestimmten Medium auf das Kühlmedium auf ein Minimum reduziert wird. Die Temperaturen von Behandlungsmedium und Kühlmittelwerden werden dabei bevorzugt unabhängig voneinander eingestellt; das Kühlmedium wird dabei auf eine Temperatur erwärmt, die gleich oder größer als die Temperatur des eingetragenen Behandlungsmediums ist.

Die bei der Vorheizung von Behandlungsmedium und/oder Kühlmittel einzustellende Temperatur ist nach oben lediglich durch die thermische Belastbarkeit des eingesetzten Material der Eintragseinrichtung begrenzt und sollte möglichst hoch gewählt werden, jedoch so, dass eine zuverlässige Kühlung der Eintragseinrichtung durch das Kühlmedium noch erreicht werden kann. Eine vorteilhafte Weiterbildung der Erfindung sieht daher vor, dass das Kühlmedium und/oder das Behandlungsmedium vor seiner/ihrer Zuführung an den Zuführungsabschnitt in einer Heizeinrichtung -je nach der thermischen Belastung des Materials in der Behandlungskammer - auf eine Temperatur von 130°C bis 400°C gebracht wird.

Um eine besonders günstige Energiebilanz zu erzielen, wird das Behandlungsmedium vor seiner Zuführung an die Eintragseinrichtung mit dem zum Kühlen der Eintragseinrichtung bereits eingesetzten Kühlmedium im Wärmekontakt gebracht und dadurch vorgewärmt. Dabei kann die Temperatur des Behandlungsmediums insbesondere durch eine Variation des Kühlmittelstroms und/oder durch eine Änderung der Geometrie der Wärmetauscherflächen gezielt beeinflusst werden.

Bei dem Kühlmittel handelt es sich bevorzugt um ein Gas, insbesondere um Wasserdampf, der auf eine Temperatur von 130°C bis über 400°C erhitzt wird, wobei die Temperatur in einem weiten Bereich eingestellt werden kann. Dabei kann der Wasserdampf als Heißdampf vorliegen, also im gesättigten Zustand bei entsprechend hohem Druck, oder in überhitzter Form, also als Dampf, der ohne bzw. bei nur geringem gleichzeitigem Druckaufbau erhitzt wurde.

Anstelle von Gas bzw. Wasserdampf kann insbesondere auch flüssiges Wasser oder ein anderes flüssiges Medium eingesetzt werden, dass, um die gewünschte Temperatur zu erhalten, entsprechend unter Druck gesetzt wird.

Die Aufgabe der Erfindung wird auch durch eine Eintragseinrichtung zum Einblasen eines Behandlungsmediums in einen thermischen Behandlungsraum gelöst, die mit wenigstens einer Mediumszuführung zum Zuführen eines Behandlungsmediums in den thermischen Behandlungsraum und mit einem zum Behandlungsraum hin geschlossenen Kühlsystem zum Kühlen der Mediumszuführung zumindest auf ihrem dem thermischen Behandlungsraum zugewandten Abschnitt ausgerüstet ist, wobei das Kühlsystem mit einer Kühlmittelzuleitung und eine Kühlmittelableitung für ein flüssiges oder gasförmiges Kühlmedium versehen ist, und die eine der Mediumszuführung vorgeschaltete Heizeinrichtung zum Erhitzen des Behandlungsmediums aufweist.

Bei der Eintrageinrichtung handelt es sich insbesondere um eine Blaslanze oder einen Brenner. Unter "Behandlungsmedium" wird hier Brennstoff in fester, flüssiger oder gasförmiger Form, ein Oxidationsmittel, insbesondere Sauerstoff, Luft oder ein sonstiges sauerstoffhaltiges Gasgemisch, oder ein sonstiges Behandlungsmittel, gleich welcher chemischen Zusammensetzung, verstanden. Im Falle, dass über die Eintragseinrichtung sowohl Brennstoff als auch ein Oxidationsmittel eingetragen wird, kann eine entsprechende Heizeinrichtung entweder für eines der Behandlungsmedium oder für beide Behandlungsmedien vorgesehen sein, wobei beide Heizeinrichtungen zur Verbesserung der Energieeffizienz thermisch miteinander gekoppelt sein können. Durch die Beheizung des Behandlungsmediums wird die Energiebilanz der erfindungsgemäßen Eintragvorrichtung gegenüber Eintragvorrichtungen nach dem Stande der Technik wesentlich verbessert.

Die Mediumszuführung und die Kühlmittelableitung stehen zwecks Wärmeübertragung vom Kühlmittel auf das Behandlungsmedium mit einem Wärmetauscher in Strömungsverbindung. Die Vorwärmung des Behandlungsmediums erfolgt in diesem Fall also durch das erhitzte Kühlmedium. Als Wärmetauscher kommt dabei beispielsweise ein handelsüblicher Wärmetauscher zum Einsatz, bei dem der Wärmeübergang an Wärmetauscherflächen erfolgt, die von beiden Medium von verschiedenen Seiten her überstrichenen werden, jedoch die stoffliche Trennung der Ströme sicher gewährleisten.

Eine abermals vorteilhafte Ausgestaltung der Erfindung sieht vor, dass die Kühlmittelzuleitung mit einer Heizeinrichtung für das Kühlmittel strömungsverbunden ist. Das Kühlmedium wird also bereits vor der Zuführung an die Eintragseinrichtung vorgeheizt und den jeweiligen Erfordernissen angepasst.

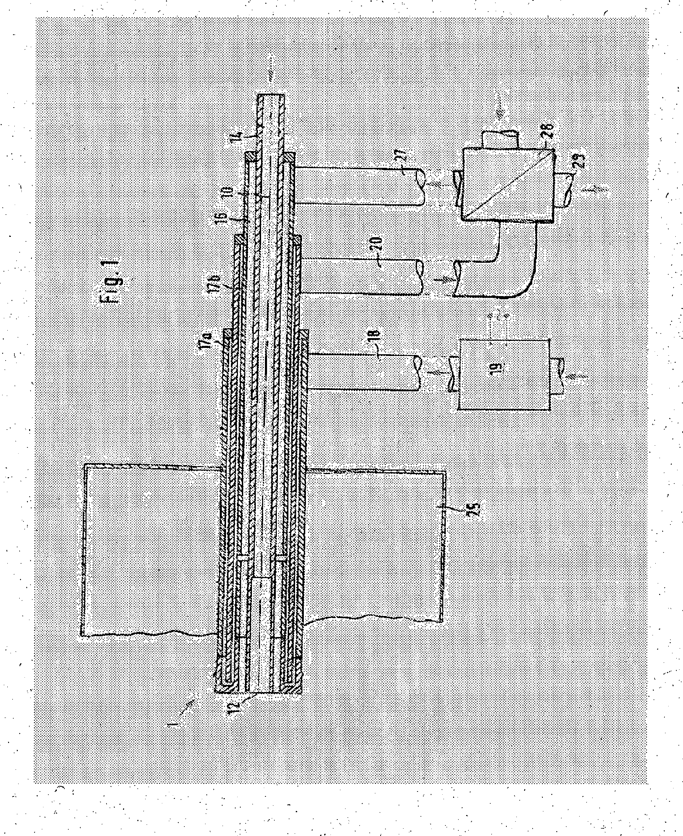

Nachfolgend wird die Erfindung anhand eines in der Zeichnung dargestellten Ausführungsbeispiels näher erläutert. Die einzige Zeichnung (Fig. 1) zeigt schematisch einen Schnitt durch einen erfindungsgemäßen Brenner.

Der in Fig. 1 dargestellte Brenner 1 umfasst einen zentralen Zuleitungskanal 14 für einen festen, flüssigen oder gasförmigen Brennstoff, der auf der Mittelachse 10 eines Zuleitungskanals 16 für ein Oxidationsmittel, beispielsweise für Luft und/oder Sauerstoff, angeordnet ist. Der Zuleitungskanal 14 ist innerhalb des Zuleitungskanals 16 axial verschiebbar angeordnet und schließt mit seiner Mündungsöffnung 12 bevorzugt auf einer Ebene mit dem Austritt des Zuleitungskanals 16 ab. Der Brenner 1 umfasst desweiteren einen zur Mündungsöffnung 12 hin geschlossenen Kühlmittelkreislauf in Form von Kühlkanälen 17a, 17b für ein gasförmiges oder flüssiges Kühlmedium, die den Zuleitungskanal 16 konzentrisch umgeben und in der Nähe der Mündungsöffnung 12 miteinander strömungsverbunden sind. In den Kühlkanal 17a mündet eine Kühlmittelzuleitung 18 ein, der eine Heizeinrichtung 19 vorgeschaltet ist. Zum Abführen des erwärmten Kühlmittels aus der Kühlleitung 17b dient eine Kühlmittelableitung 20. Der Brenner 1 mündet in einen abgeschlossenen thermischen Behandlungsraum 25 ein, beispielsweise eine Verbrennungskammer.

Beim Betrieb des Brenners 1 wird Brennstoff, beispielsweise Öl oder Erdgas, durch den Zuleitungskanal 14 in den thermischen Behandlungsraum 25 eingeblasen und dabei zerstäubt. Gleichzeitig wird ein Oxidationsmittel über eine Zuführung 27 in den Zuleitungskanal 16 geführt und von dort ebenfalls in den thermischen Behandlungsraum 25 eingeleitet. Das Oxidationsmittel wird vor der Oxidation auf eine Temperatur von beispielsweise 100°C bis 400°C vorgewärmt. Die Vorwärmung erfolgt in einem Wärmetauscher 28 der der Zuführung 27 strömungstechnisch vorgeschaltet ist und in der das Oxidationsmittel in thermischen Kontakt mit dem erwärmten Kühlmittel aus der Kühlmittelableitung 20 gebracht wird. In ähnlicher, hier nicht gezeigter Weise kann auch der Brennstoff durch das erwärmte Kühlmittel vorgeheizt werden, indem ein weiterer Wärmetauscher für den Brennstoff vorgesehen wird, der bezügliche der Strömung des Kühlmediums parallel oder in Serie zum Wärmetauscher 28 angeordnet wird. Alternativ zum Wärmetauscher 28 kann auch eine Heizeinrichtung zum Einsatz kommen, die mit externer, beispielsweise elektrischer Energie betrieben wird, oder ein Wärmetauscher, der die Wärme im Innern des Behandlungsraums 25 zum Vorheizen des Oxidationsmittels und/oder des Brennstoffs nutzt.

Zur Kühlung des Brenners 1 kommt beispielsweise Wasserdampf, zum Einsatz. Hierzu wird Wasser bereits im dampfförmigen Zustand der Heizeinrichtung 19 zugeführt, oder es wird flüssiges Wasser in der Heizeinrichtung 19 verdampft. Der Wasserdampf wird, falls nötig, in der Heizeinrichtung 19 weiter erhitzt und auf eine Temperatur von 130°C bis 400°C gebracht. Aufgrund der Überhitzbarkeit des Dampfes kann die Temperatur in einem weiten Bereich eingestellt und so den jeweiligen Erfordernissen angepasst werden. Insbesondere kann eine möglichst hohe Temperatur eingestellt werden, die lediglich durch die thermische Belastbarkeit des Brennermaterials begrenzt ist. Der heiße Dampf strömt über die Kühlmittelzuführung 18 in die Kühlleitung 17a ein und strömt durch die Kühlleitung 17a in Richtung der Mündungsöffnung 12 und kühlt dadurch den in die Behandlungskammer 25 hereinragenden bzw. an diese angrenzenden Abschnitt des Brenners 1. Über die Strömungsverbindung mit der Kühlleitung 17b wird der Dampfstrom umgelenkt; es besteht keine Strömungsverbindung zum Inneren des thermischen Behandlungsraumes 25. Durch die Gegenstromführung des Dampfes in den Kühlleitungen 17a und 17b wird der einströmende Dampf vom abströmendem Dampf weiter aufgeheizt. Der durch den Kühlvorgang erhitzte abströmende Dampf wird über die Kühlmittelableitung 20 zum Wärmetauscher 28 transportiert, erwärmt im Wärmetauscher 28 das Oxidationsmittel und wird anschließend über einen Abfuhrstutzen 29 abgeführt, von dem aus er gegebenenfalls einer weiteren Verwendung zugeführt wird. Desweiteren kann der erhitzte Dampf aus der Kühlmittelableitung 20 auch zum Vorwärmen des in die Kühlmittelzuleitung 18 eingeführten Dampfes verwendet werden. Anstelle von Wasserdampf kann selbstverständlich auch ein anderes gasförmiges oder flüssiges Kühlmedium zum Einsatz kommen, beispielsweise flüssiges Wasser, das zur Erreichung der gewünschten Kühltemperaturen unter einen entsprechenden Druck gesetzt wird.

Die Heizleistung der Heizeinrichtung 19 kann in Abhängigkeit von bestimmten Prozessparametern, wie beispielsweise der Temperatur im Behandlungsraum, der Temperatur an einer Oberfläche des Brenners und/oder der Temperatur des Oxidationsmittels im Zuleitungskanal 16, die mittels hier nicht gezeigter Sensoren gemessen werden, geregelt und damit die Temperatur des Kühlmediums vor dessen Zuführung an die Kühlleistungen 17a, 17b eingestellt werden.

Der Einsatz von vorgeheiztem, gas- oder dampfförmigen oder flüssigen Kühlmedium verhindert auch die Kondensation von Wasserdampf aus der Atmosphäre im Behandlungsraum 25 auf der Außenseite des in den Behandlungsraum 25 hineinragenden, bzw. dem Behandlungsraum 25 zugewandten Brennerkopfs und dadurch insbesondere auch die Korrosion des Brenners 1 in dem Fall, dass aggressive Stoffe im Behandlungsraum 25 oder im Abgas anwesend sind.

Die Energiebilanz kann noch dadurch verbessert werden, dass die hohen Temperaturen im Behandlungsraum 25 zur Erwärmung des Brennstoffs / Oxidationsmittels und/oder des Kühlmittels eingesetzt werden. Dies kann beispielsweise durch eine geeignete Führung der entsprechenden Zuleitungen 18, 27 erfolgen. Auf dieses Weise kann die Energiebilanz bestehender Einrichtungen mit vergleichsweise geringem Aufwand deutlich verbessert werden.

### Bezugszeichenaufstellung

- 1: Brenner
- 10: Mittelachse
- 11: -
- 12: Mündungsöffnung
- 13: -
- 14: Zuleitungskanal (für Brennstoff)
- 15: -
- 16: Zuleitungskanal (für Oxidationsmittel)
- 17a: Kühlleitung
- 17b: Kühlleitung
- 18: Kühlmittelzuleitung
- 19: Heizeinrichtung
- 20: Kühlmittelableitung
- 21: -
- 22: -
- 23: -
- 24: -
- 25: Behandlungsraum
- 26: -
- 27: Zuführung (für Oxidationsmittel)
- 28: Wärmetauscher
- 29: Abführstutzen

## Patentansprüche

1. Verfahren zum Eintragen eines Behandlungsmediums in einen thermischen Behandlungsraum (25) mittels einer Eintragseinrichtung (1) welche Eintragseinrichtung (1) mittels eines durch ein zum Behandlungsraum (25) hin geschlossenes Kühlsystem (17a,17b) geführten Kühlmediums gekühlt wird,
**dadurch gekennzeichnet,**
**dass** das Behandlungsmedium und das Kühlmedium jeweils vor seiner Zuführung zur Eintragseinrichtung (1) vorgewärmt wird, wobei das Kühlmedium auf eine Temperatur erwärmt wird, die gleich oder größer als die Temperatur des Behandlungsmediums ist.

2. Verfahren nach Anspruch 1, **dadurch gekennzeichnet, dass** das Kühlmedium und/oder das Behandlungsmedium vor seiner Zuführung an den Zuführungsabschnitt in einer Heizeinrichtung (19) auf eine Temperatur von 130°C bis 400°C gebracht wird.

3. Verfahren nach einem der vorhergehenden Ansprüche, **dadurch gekennzeichnet, dass** das Behandlungsmedium vor seiner Zuführung an die Eintragseinrichtung (1) mit dem zum Kühlen der Eintragseinrichtung (1) bereits eingesetzten Kühlmedium im Wärmekontakt gebracht wird.

4. Verfahren nach einem der vorhergehenden Ansprüche, **dadurch gekennzeichnet, dass** als Kühlmedium ein gasförmiges Medium, insbesondere Wasserdampf, zum Einsatz kommt.

5. Verfahren nach einem der Ansprüche 1 bis 3, **dadurch gekennzeichnet, dass** als Kühlmedium unter Druck stehendes, flüssiges Wasser zu Einsatz kommt.

6. Verfahren nach einem der vorhergehenden Ansprüche, **dadurch gekennzeichnet, dass** die Temperaturen im Behandlungsraum (25) zur Erwärmung des Behandlungsmediums und/oder des Kühlmittels eingesetzt werden.

7. Eintragseinrichtung zum Einblasen eines Behandlungsmediums in einen thermischen Behandlungsraum (25) mit wenigstens einer Mediumszuführung (14,16) zum Zuführen eines Behandlungsmediums, wie Brennstoff und/oder Oxidationsmittel in den thermischen Behandlungsraum (25) und mit einem zum Behandlungsraum (25) hin geschlossenen Kühlsystem (17a,17b) zum Kühlen der Mediumszuführung (14,16) zumindest auf ihrem dem thermischen Behandlungsraum (25) zugewandten Abschnitt, das mit einer Kühlmittelzuleitung (18) und eine Kühlmittelableitung (20) für ein flüssiges oder gasförmiges Kühlmedium ausgerüstet ist,
**gekennzeichnet durch** eine der Mediumszuführung (14, 16) vorgeschaltete Heizeinrichtung (28) zum Erhitzen des Behandlungsmediums, wobei die Mediumszuführung (14,16) und die Kühlmittelableitung (20) zwecks Vorheizung des Behandlungsmediums in einem Wärmetauscher (28) in thermischen Kontakt miteinander stehen.

8. Eintragseinrichtung nach Anspruch 7, **dadurch gekennzeichnet, dass** die Kühlmittelzuleitung (18) eine Heizeinrichtung (19) für das Kühlmittel zugeordnet ist.

9. Brenner nach einem der Ansprüche 7 oder 8 mit einer Zuführung (14) für einen Brennstoff und einer Zuführung (16, 27) für ein Oxidationsmittel, **dadurch gekennzeichnet, dass** der Zuführung (16) für den Brennstoff und/oder der Zuführung für das Oxidationsmittel mit einer Heizeinrichtung (28) zugeordnet ist.

## Claims

1. Method for feeding a treatment medium into a thermal treatment chamber (25) by means of a feeding device (1), which feeding device (1) is cooled by means of a cooling medium passed through a cooling system (17a, 17b) that is closed with respect to the treatment chamber (25),
**characterized**
**in that** the treatment medium and the cooling medium are respectively preheated before being fed to the feeding device (1), the cooling medium being heated to a temperature that is the same as or greater than the temperature of the treatment medium.

2. Method according to Claim 1, **characterized in that**, before being fed to the feeding portion, the cooling medium and/or the treatment medium is brought to a temperature of 130°C to 400°C in a heating device (19).

3. Method according to one of the preceding claims, **characterized in that**, before being fed to the feeding device (1), the treatment medium is brought into thermal contact with the cooling medium already used for cooling the feeding device (1).

4. Method according to one of the preceding claims, **characterized in that** a gaseous medium, in particular steam, is used as the cooling medium.

5. Method according to one of Claims 1 to 3, **characterized in that** pressurized, liquid water is used as the cooling medium.

6. Method according to one of the preceding claims, **characterized in that** the temperatures in the treatment chamber (25) are used for heating the treatment medium and/or the cooling medium.

7. Feeding device for blowing a treatment medium into a thermal treatment chamber (25) comprising at least one medium feed (14, 16) for feeding a treatment medium, such as fuel and/or oxidizing agent, into the thermal treatment chamber (25) and comprising a cooling system (17a, 17b), which is closed with respect to the treatment chamber (25), for cooling the medium feed (14, 16), at least on the portion thereof that is facing the thermal treatment chamber (25) and is provided with a cooling medium feed line (18) and a cooling medium discharge line (20) for a liquid or gaseous cooling medium,
**characterized by** a heating device (28), arranged upstream of the medium feed (14, 16), for heating the treatment medium, the medium feed (14, 16) and the cooling medium discharge line (20) being in thermal contact with one another for the purpose of preheating the treatment medium in a heat exchanger (28).

8. Feeding device according to Claim 7, **characterized in that** the cooling medium feed line (18) is assigned a heating device (19) for the cooling medium.

9. Burner according to either of Claims 7 and 8, comprising a feed (14) for a fuel and a feed (16, 27) for an oxidizing agent, **characterized in that** the feed (16) for the fuel and/or the feed for the oxidizing agent is/are assigned a heating device (28).

## Revendications

1. Procédé d'introduction d'un milieu de traitement dans un espace de traitement thermique (25) au moyen d'un dispositif d'introduction (a), lequel dispositif d'introduction (1) est refroidi au moyen d'un réfrigérant guidé à travers un système de refroidissement (17a, 17b) fermé vers l'espace de traitement (25),
**caractérisé en ce que**
le milieu de traitement et le réfrigérant sont chacun préchauffés avant d'être acheminés au dispositif d'introduction (1), le réfrigérant étant chauffé à une température supérieure ou égale à la température du milieu de traitement.

2. Procédé selon la revendication 1, **caractérisé en ce que** le réfrigérant et/ou le milieu de traitement, avant d'être acheminés à la section d'acheminement, sont amenés dans un dispositif de chauffage (19) à une température de 130°C à 400°C.

3. Procédé selon l'une quelconque des revendications précédentes, **caractérisé en ce que** le milieu de traitement, avant d'être acheminé au dispositif d'introduction (1), est amené en contact thermique avec le réfrigérant déjà utilisé pour refroidir le dispositif d'introduction (1).

4. Procédé selon l'une quelconque des revendications précédentes, **caractérisé en ce que** l'on utilise comme réfrigérant un milieu gazeux, en particulier de la vapeur d'eau.

5. Procédé selon l'une quelconque des revendications 1 à 3, **caractérisé en ce que** l'on utilise comme réfrigérant de l'eau liquide sous pression.

6. Procédé selon l'une quelconque des revendications précédentes, **caractérisé en ce que** les températures dans l'espace de traitement (25) sont utilisées pour chauffer le milieu de traitement et/ou le réfrigérant.

7. Dispositif d'introduction destiné à souffler un milieu de traitement dans un espace de traitement thermique (25) comprenant au moins une alimentation en milieu (14, 16) pour acheminer un milieu de traitement tel que du combustible et/ou un agent d'oxydation dans l'espace de traitement thermique (25) et comprenant un système de refroidissement (17a, 17b) fermé vers l'espace de traitement (25) pour refroidir l'alimentation en milieu (14, 16) au moins au niveau de sa portion tournée vers l'espace de traitement thermique (25), qui est équipé d'une conduite d'amenée de réfrigérant (18) et d'une conduite d'évacuation de réfrigérant (20) pour un réfrigérant liquide ou gazeux,
**caractérisé par** un dispositif de chauffage (28) monté en amont de l'alimentation en milieu (14, 16) pour chauffer le milieu de traitement, l'alimentation en milieu (14, 16) et la conduite d'évacuation de réfrigérant (20) étant en contact thermique l'une avec l'autre afin de préchauffer le milieu de traitement dans un échangeur de chaleur (28).

8. Dispositif d'introduction selon la revendication 7, **caractérisé en ce que** la conduite d'amenée de réfrigérant (18) est associée à un dispositif de chauffage (19) pour le réfrigérant.

9. Brûleur selon l'une quelconque des revendications 7 ou 8, comprenant une alimentation (14) pour un combustible et une alimentation (16, 27) pour un agent d'oxydation, **caractérisé en ce qu'**un dispositif de chauffage (28) est associé à l'alimentation (16) pour le combustible et/ou à l'alimentation pour l'agent d'oxydation.
